Europäisches Patentamt

European Patent Office

Office européen des brevets

(11) Publication number: 0 394 809
A2

# EUROPEAN PATENT APPLICATION

(21) Application number: 90107234.8

(22) Date of filing: 17.04.90

(51) Int. Cl.5: B65B 23/14

(30) Priority: 26.04.89 IT 2027389

(43) Date of publication of application:
31.10.90 Bulletin 90/44

(84) Designated Contracting States:
CH DE ES FR GB LI NL SE

(71) Applicant: RECORD S.P.A.
Via Italia, 32
I-22040 Garbagnate Monastero (CO)(IT)

(72) Inventor: Bernardi, Germano
Via Montenero 4
Galliate (Novara)(IT)
Inventor: Fioravanti, Giuseppe
Via Molino 2
Montorfano (Como)(IT)

(74) Representative: La Ciura, Salvatore
Via Francesco Sforza 5
I-20122 Milano(IT)

(54) Apparatus for packaging crackers, biscuits and the like and method utilizing the apparatus.

(57) The invention relates to an apparatus for packaging crackers, biscuits and the like, which comprises devices for picking up (12), while counting, one by one, a given number of products; checking the products as to their conformity to a prescribed weight, and moving them to a packaging station (4).

The devices (3) for conveying the products are capable of automatically adapting themselves to different lengths of stacks of biscuits.

The invention also concerns a method utilizing the apparatus.

FIG. 2

# APPARATUS FOR PACKAGING CRACKERS, BISCUITS AND THE LIKE AND METHOD UTILIZING THE APPARATUS.

This invention relates to an apparatus for packaging crackers, biscuits and the like products, which is designed to pick up and stack a certain number of products, check their conformity to a determined weight and move them to a packaging station in a fully automatic manner.

The invention also relates to a method utilizing said apparatus.

Apparatus for packaging products such as crackers, biscuits or the like are known. They comprise a supply channel for the products which are delivered in stacked state to a picking up device generally consisting of a fork that picks up a quantity of product corresponding to a predetermined volume and charges the products into suitable containers making part of a conveyor by which the products are moved to final packaging.

However, these apparatus have drawbacks in that the product is measured in, so to speak, a "volumetric" manner. Current regulations impose, in fact, that packaged product must conform to an indicated weight with the allowance being extremely narrow, such that picking up the product according to volumetric criteria is lacking in precision.

Furthermore, it should be considered that these machines, in order to be cost efficient, must be able to work at high speeds, more specifically they must be capable of picking up, stacking and packaging several hundred crackers per minute.

Therefore, the need is felt in this branch for means which permit the above operations to be performed with accuracy thereby securing conformity of picked-up product to prescribed weight, and which are safe in operation and simple in construction.

In order to overcome the above problems, the invention provides an apparatus - and a method utilizing thereof -for packaging crackers, biscuits and the like, which apparatus comprises means for performing the steps of: picking up crackers, one by one; arranging the products in stacks each comprising a determined number of products; checking these products as to their conformity to a prescribed weight; and moving them to a packaging station.

The invention will now be described in more details with reference to the accompanying drawings, in which:

Figure 1 is a schematic plan view of an apparatus according to the invention, and

Figure 2 is a schematic sectional view of the apparatus in figure 1.

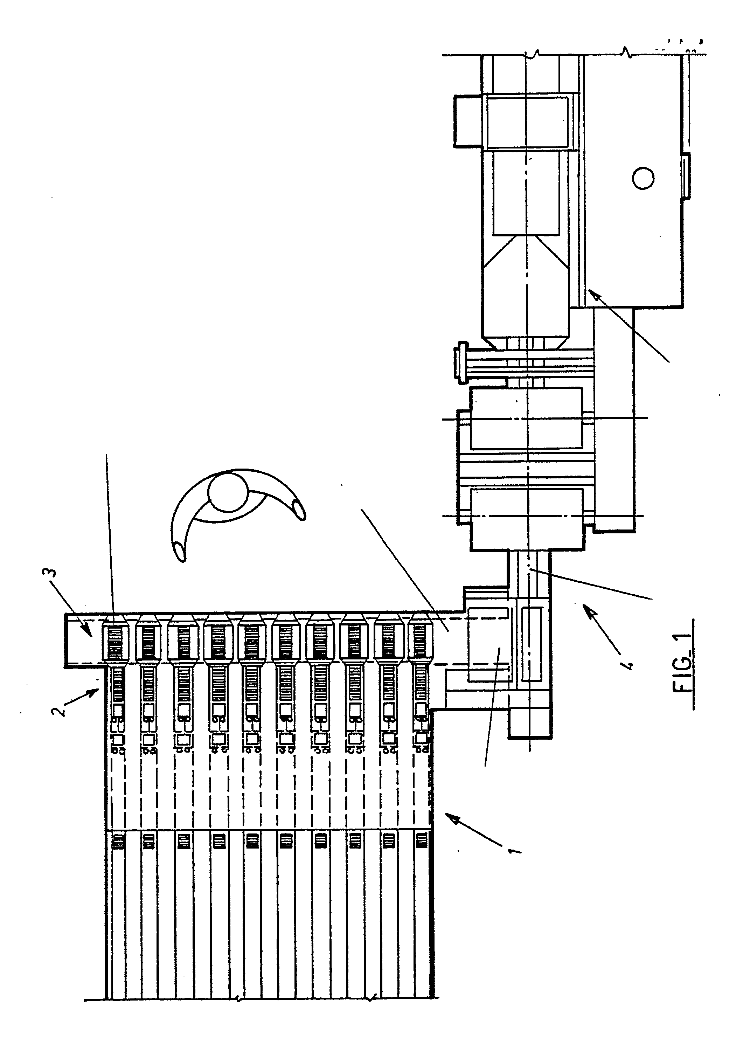

Referring to figure 1, an apparatus according to the invention comprises a plurality of feed devices 1 from which a product is supplied to devices 2 for forming stacks of product which are delivered to conveyor means 3 moving the product to packaging stations 4.

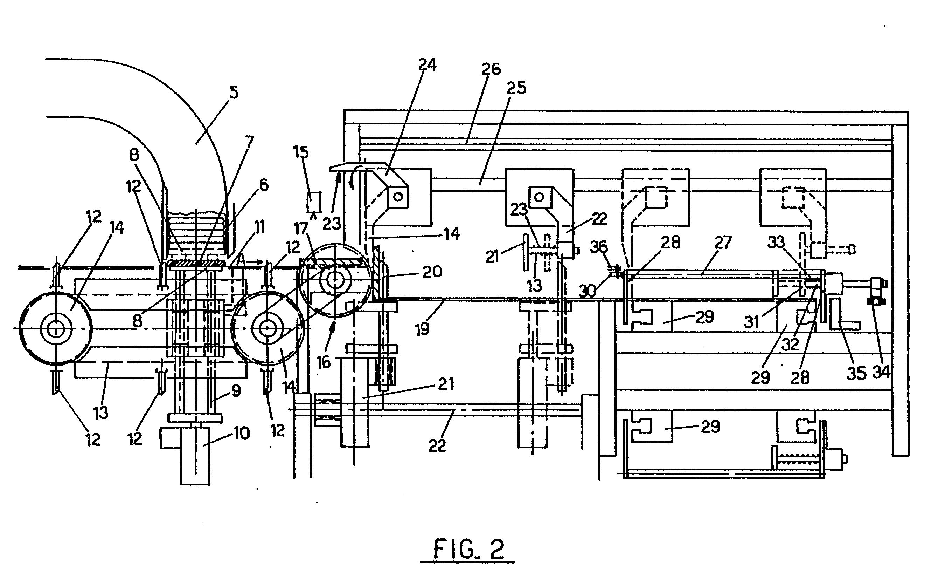

Referring now to figure 2, each feeder device comprises a feed conduit or channel 5 terminating in a substantially vertical portion 6 through which products arranged side-by-side or in stacks are coming in.

The lowermost cracker in a stack in feeder 6, which is shown by hatched lines and indicated by numeral 7 in figure 2, drops from the feeder onto a table 8 that is secured to a pair of uprights 9, these uprights 9 being slidable in a substantially vertical direction by means of a plunger 10, or the like, to bring the table 8 from the position in figure 2 where it is aligned with a fixed slide table 11 for the products, to a lifted position shown by a dash-line, figure 2.

Formed in slide table 11 are a pair of slits in which associated pairs of pins 12 are slidingly received, the pins 12 being secured to respective chains 13 or the like, running on a pair of wheels 14 which are driven, for example, from a stepper motor, so as to perform well determined rotations.

The pins 12 are jutting out with respect to tables 8 and 11 by a sufficient distance to enable them to engage and, thus, to pick up from a stack supplied by feeder 5, that cracker which is at a lowermost level, to draw it forward in a direction towards further devices.

As a matter of fact, the distance between the end portion of feeder 6 and the tables 8 and 11 will be slightly greater than the thickness of one cracker.

Provided downstream of the feeder is a photocell 15 for detecting the passage of product which is discharged in a direction towards a picking up device generally indicated by numeral 16 comprising a rotating member having a pair of orthogonally arranged walls 17 and 18.

The device 16, a so-called "star" according to a slang expression, is rotated in synchronism with the wheels 14 driving the chains 13 and pins 12. In an operating position, the wall 17 is aligned with the slide table 11; while the wall 18 serves as a stop and abutment means for the product that is pushed towards the star 16 by pins 12.

As mentioned above, each time the pins 12 are advanced one step, the star performs a 180° rotation, during which rotation the star deposits the product on a table 19.

The cracker is supported on table 19 in a substantially horizontal posizion by means of a fork 20 which is slidable in a pair of elongated slots provided in said table 19.

The fork 20 is mounted to a support 21 which engages with a threaded shaft 22 or the like system that is in turn driven in rotation from a stepper motor in synchronism with other devices (this function as well as all other functions of the machine being controlled by a computer).

Provided above the table 19 are two grip devices 20, so-called "pitchforks", one of which is a plate member 21 mounted to a support arm 22 and subjected to the effect of a spring 23, or the like, tending to urge the plate 21 to the left in figure 2, while the other is a plate member 23 mounted to a support arm 24 which is rotated, by means known per se, about a substantially horizontal axis to move it from a full-line position to a dash-line position, figure 2.

These devices are both mounted to a common support, not shown in the drawings, which is slidable on a guide 25 and is driven by a threaded shaft 26 driven in turn from a stepper motor, not shown.

Provided downstream of these dip devices is the conveyor 3 for moving the picked-up and stacked crackers towards a packaging station.

This conveyor 3 is substantially a "blind"-type conveyor comprising a plurality of rods 27 secured at their ends to a pair of walls 28 secured in turn to chains or the like, not shown, sliding on guides 29.

A sensor 30 is provided near the path of the conveyor rods 27 and is able to sense the passage of each conveyor rod to produce a corresponding signal for application to devices driving the apparatus.

Mounted on the wall 28 that is placed downstream with respect to the incoming direction of a cracker stack, is a movable stop formed by a wall 31 fixed to the end of a rod 32 which is urged by spring means 33, such as a helical spring or the like, towards the center of the conveyor, in the position as shown by a dotted line.

The other end of rod 32 has a pad 34 fixed thereto, which is engaged by a movable wall 35 driven by a cam, not shown.

The function of wall 35 is to push the pad 34 to the right in order to kept the stop 31 full open, or to release it to permit the stop 31 to press against a stack of crackers having been charged on the conveyor meanwhile.

A second sensor 36 is arranged downstream the sensor 30 and is in turn effective for detecting the passage of conveyor rods 27.

The sensor 36 whose operation is explained in the following, will in turn produce a signal for application to electronic devices controlling the machine.

Finally, connected to these same devices and arranged downstream of the conveyor, are weighing means, not shown since well known per se, which are to check the weight of a stack of packaged crackers.

Operation is as follows:

Assuming that the number of products to be packaged each time has been programmed in advance, crackers, or the like, are fed through the feed conduit 5 until a first of them will reach the table 8 where the product is caught by the advancing pins 12 to be driven towards the picking-up means 16.

In the meantime, a next coming cracker is advanced and deposited on table 8 to be caught by subsequent pins.

The just withdrawn cracker from the feeder passes under photocell 15, which detects its passage, and is then discharged onto the star 16, by the rotation of which the product is deposited on table 19 where it is held in upright position by fork 20.

On each advancing step of the machine and picking-up of a cracker, the threaded shaft 22 performs a partial rotation causing the support 21 and fork 20 to move forwards by a distance substantially equal to the thickness of one cracker.

When a predetermined number of crackers is attained as checked by photocell 15, the machine control devices cause rotation of arm 24 until the plate member 23 is brought to press against the cracker stack so that this latter is tightly retained between said plate 23 and the counteracting plate 21 that is kept pressed against the cracker stack by spring 23.

At the same time, the plunger 10 is actuated to move up the table 8 and, thus, to lift the crackers thereby preventing them from becoming caught by pins 12.

Simultaneously, the sensors in proximity to the rod conveyor 3 are energized.

During this step, the wall 35 is entirely moved to the right to keep the counteracting plate 31 in an open position, shown in full line in the drawings.

When a conveyor rod 27 approaches a point in the proximity of sensor 30 this latter produces a signal as a result of which the processor actuates the motor to cause rotation of threaded shaft 26 to move the "pitch forks" together with the stack of crackers, to the right, the cracker stack then being charged into the conveyor between two consecutive rods 7.

The stack of crackers is retained by the "pitchforks" until a conveyor rod 27, whose passage is sensed by sensor 36, approaches it.

As a result of the signal from sensor 36, the wall 35 is moved to the left thereby releasing the pad 34 and plate 31 which latter is urged by spring 33 to the left so as to press the stack of crackers against the opposite wall 28.

At this time, the left pitchfork is opened again whereupon the pitchforks return to their start position.

Then, the table 8 is moved down again and the cycle can recommence.

By this construction, the described apparatus can operate at high speed and take advantage of all the possibilities offered by electronic control.

In particular, after the stack of crackers are packaged they are weighed again and depending on whether their weight corresponds, or not, to the predetermined weight, the computer controls the machine so that, if necessary, a greater or smaller number of crackers will form each pile.

It will be understood that the above funtions can be adjusted for each feed channel 1 individually. As distinct from prior art methods which provide for picking up a quantity of crackers as determined on a volume basis thereof, the method of the invention provides for picking up a determined number of products which are engaged by grip means subjected to spring force, verifying the weight of these products and, if necessary, changing them in number until packages of a required weight can be obtained.

Moreover, several components of the apparatus described above may be replaced by equivalent components without departing from the inventive principle.

Thus, for example, the plunger 10 may be replaced by a motor that drives a threaded shaft, or cams may be used in lieu of a stepper motor for causing movements of fork 20.

Many other modifications and changes may be thought by those skilled in the art and are intended to fall within the scope of this invention as defined in the appended claims.

## Claims

1. An apparatus for packaging crackers or the like, of a type comprising means for picking up a certain quantity of product from a feeder device and for moving it to a packaging station, characterized in that products are picked up individually and means are provided which are effective for stopping a cycle when a predetermined number of crackers is attained.

2. The apparatus according to claim 1, wherein said apparatus includes means for arranging the picked-up crackers in stacks, and grip means subjected to spring force for picking-up the thus formed stack and depositing it on a conveyor.

3. The apparatus for packaging crackers or the like according to claim 1, wherein said means for picking up are pairs of pins secured to a conveyor and movable on a table on which is resting a stack of crackers supplied from a feeder placed above said table, said pins picking up said crackers one by one and directing them towards receiving devices, means being moreover provided for lifting up said table in order to stop the cracker picking-up step when a required quantity thereof is attained.

4. The apparatus according to claim 3, wherein said receiving devaces include a pivoting plate (17) capable of receiving crackers and discharging them onto a table (19) so as to have them resting against a support fork (20), means being provided which operate in synchronism with the picking-up devices to cause the fork to retract, at each step, by a distance equal to the thickness of one cracker.

5. The apparatus according to claim 4, wherein said means causing retraction of the fork comprises a threaded shaft driven from a stepper motor and engaging with a support of said fork.

6. The apparatus according to claim 4, wherein said apparatus includes grip means designed to pick up a stack of crackers and direct them towards a conveyor, said grip means being subjected to spring force.

7. The apparatus according to claim 6, wherein said grip means comprise a plate element mounted to a fixed support and subjected to spring force, and a plate element mounted to a movable support which can be moved from a position where it does not interfere with the passage of crackers to a dropped position where it forms counteracting walls for retaining said crackers.

8. The apparatus according to any of the preceding claims, wherein said apparatus includes a "blind"-type conveyor for directing stacks of crackers towards packaging apparatus, means being provided by which the position of rods forming said conveyor is detected and, depending on said position, the charging of a stack of crackers is decided.

9. The apparatus according to claim 8, wherein said means are a proximity detector.

10. The apparatus according to claim 9, wherein second sensing means are provided near the rod conveyor and are able to detect the rods of said conveyor when approaching a stack of crackers charged thereon, and, as a result, to actuate means for stopping said crackers on said conveyor and causing the stack-gripping means to open.

11. The apparatus according to claim 10, wherein said means for stopping a stack inside said conveyor is a movable wall subjected to, on the one hand, the effect of spring means and, on the other hand, the effect of a cam acting in opposition to said spring means to main tain said wall in fully open position.

12. The apparatus according to any of the preceding claims, wherein said apparatus includes means designed to detect the weight of picked-up crackers, to compare the detected weight with a predetermined value, and to influence the control devices of the machine as a function of the detected weight.

13. A method of packaging crackers characterized in that the method comprises the steps of: - picking up a predetermined number of crackers from a feeder means, checking conformity of the weight of said crackers to a predetermined value, and then adjusting the number of crackers to be picked up at each cycle as a function of the detected value.

FIG. 1

FIG. 2